# NEUE EUROPÄISCHE PATENTSCHRIFT

(11) **EP 2 060 607 B2**
(45) Veröffentlichungstag und Bekanntmachung des Hinweises auf die Entscheidung über den Einspruch: **27.11.2019**
(45) Hinweis auf die Patenterteilung: 18.01.2017
(21) Anmeldenummer: 07022306.0
(22) Anmeldetag: 16.11.2007
(51) Int. Cl.: C08L 77/00, C08L 77/02, C08L 77/06, C08J 5/04, C08K 7/14

(54) **Gefüllte Polyamidformmassen**
Filled polyamide moulding materials
Composition à mouler chargée à base de polyamide

(43) Veröffentlichungstag der Anmeldung: 20.05.2009
(73) Patentinhaber: EMS-PATENT AG, 7013 Domat/Ems (CH)
(72) Erfinder: Harder, Philipp, 7000 Chur (CH); Linster, Jean-Jacques, 7000 Chur (CH); Stöppelmann, Georg, 7402 Bonaduz (CH)
(74) Vertreter: Pfenning, Meinig & Partner mbB

(56) Entgegenhaltungen:
- EP-A1- 1 972 659
- WO-A-2007/080754
- JP-A- 8 259 808
- JP-A- 10 219 026
- JP-A- 2006 045 390

## Beschreibung

Die Erfindung betrifft gefüllte Polyamidformmassen, die neben einer ausgewählten Polymermischung aus zwei verschiedenen Polyamiden Langglasfasern mit nicht kreisförmiger Querschnittsfläche enthalten. Die vorliegende Erfindung betrifft weiterhin die Verwendung derartiger Formmassen zur Herstellung von Formkörpern und die Formkörper selbst.

Polyamide sind heutzutage weit verbreitet als Strukturelemente für den Innen- und Außenbereich, was im Wesentlichen auf die hervorragenden mechanischen Eigenschaften zurückzuführen ist.

Eine Verbesserung der mechanischen Eigenschaften, wie Festigkeit und Steifheit, lässt sich insbesondere durch den Zusatz von faserförmigen Verstärkungsstoffen, z.B. Glasfasern, erreichen.

So beschreibt die EP 0 246 620 B1 einen glasfaserverstärkten thermoplastischen Kunststoff, wobei hier Glasfasern mit einem rechteckigen, elliptischen oder hüllenförmigen Querschnitt in geschnittener Form verwendet werden.

In der EP 0 376 616 B1 wird eine thermoplastische Polymerzusammensetzung offenbart, bei der eine faserartige Verstärkung enthalten ist, wobei diese einen nicht-kreisförmigen Querschnitt aufweist und eine gekrümmte oder halbrunde Kontur besitzt.

Letztlich offenbart die DE 103 46 326 A1 flammgeschützte Polyamidformmassen und deren Verwendung, wobei hier als Verstärkungsmaterialien Glasfasern in rundem Querschnitt in Form endloser Stränge (Rowings) oder in geschnittener Form (Glasfasern) eingearbeitet sind.

Aus der JP 2006-045390 A ist ein Pellet aus einer thermoplastischen Formmasse bekannt, das abgeflachte Glasfasern beinhaltet.

Die JP 08-259808 A betrifft eine Polyamidharz-Zusammensetzung mit einem 30 - 45 Gew.-%igen Anteil aus Glasfasern mit nichtrundem Querschnitt.

Die JP 10-219026 betrifft eine Zusammensetzung, die eine Mischung aus Glasfasern mit kreisrundem und abgeflachtem Durchmesser umfasst.

Die WO 2007/080754 A1 betrifft eine Polyamidharz-Zusammensetzung zur Herstellung von tragbaren elektronischen Geräten sowie Formkörper für tragbare elektronische Geräte.

Es hat sich allerdings gezeigt, dass die bisher im Stand der Technik bekannten glasfaserverstärkten Kunststoffe, auch Polyamidformmassen die Glasfasern enthalten, noch nicht in allen Punkten befriedigende Ergebnisse liefern. So ist es wünschenswert, mit Glasfasern verstärkte Polyamidformmassen und hieraus herstellbare Formteile zur Verfügung zu stellen, die einen geringen Verzug, hohe Quersteifigkeit und Festigkeit sowie eine ausgezeichnete Oberflächenqualität bei gleichzeitig hohem Füllgrad mit den Verstärkungsfasern erreichen. Insbesondere besteht ein großes Bedürfnis nach Formkörpern aus Polyamidformmassen mit Glasfasern, die in Bezug auf die Wärmeformbeständigkeit (HDT) überlegene Eigenschaften zum Stand der Technik aufweisen.

Aufgabe der vorliegenden Erfindung ist es deshalb, Polyamidformmassen anzugeben, die zu Formkörpern verarbeitet werden können, wobei die Formkörper möglichst gleichzeitig ausgezeichnete Eigenschaften betreffend den Verzug, die Kerbschlagzähigkeit, die Quersteifigkeit und Festigkeit sowie die Oberflächenqualität und die Wärmeformbeständigkeit aufweisen sollen.

Diese Aufgabe wird in Bezug auf die Formmasse durch die Merkmale des Patentanspruches 1, betreffend den Formkörper durch die Merkmale des Patentanspruches 14 gelöst. Die Unteransprüche zeigen vorteilhafte Weiterbildungen auf.

Die erfindungsgemäß vorgeschlagene gefüllte Polyamidformmasse zeichnet sich nach dem unabhängigen Patentanspruch 1 dadurch aus, dass sie eine eine Polyamidmatrix bildende Polymermischung aufweist, die aus spezifischen Edukten gebildet worden ist.

Die Polymermischung umfasst danach 55 bis 85 Gew.-% mindestens eines aliphatischen Polyamides A1, das ausgewählt ist aus der Gruppe PA6, PA46, PA66, PA610, PA612, PA6/12, PA1010, PA11, PA12, PA1012, PA1212 und/oder Mischungen und/oder Copolyamide hiervon.

Weiterhin enthält die Polymermischung als zweiten Bestandteil 15 bis 45 Gew.-% mindestens eines Polyamides (A2), das ausgewählt ist aus MACM10-18, PACM10-18, MACMI, MACMT, MXDI, MXD6, 6I, 6T sowie Mischungen und/oder Copolyamiden hiervon sowie den Copolyamiden mit PA66, PA610, PA6 und PA12. Bevorzugte Polyamide sind MACM12, MACMI/12, MACM12/PACM12, MXD6, MXD6/MXDI, 6I, 6I/6T, 6T/66, 6T/6I/66, 6T/610, und 6T/12. Insbesondere werden die Polyamide 6I/6T und MXD6/MXDI bevorzugt als Komponente (A2) eingesetzt.

Alternativ hierzu (Patentanspruch 2) umfasst die vorliegende Erfindung die Variante, dass der Polymermischung, in Bezug auf die Polyamide, ausschließlich aus dem Polyamid (A1) besteht.

Wesentlich bei der vorgeschlagenen gefüllten Polyamidformmasse ist nun, dass in der Polyamidmatrix, die aus 40 bis 80 Gew.-% der vorstehend beschriebenen Polymermischung besteht, 20 bis 60 Gew.-% einer Langglasfaser mit nicht-kreisförmiger Querschnittsfläche und einem Abmessungsverhältnis von der Hauptquerschnittsachse zur Nebenquerschnittsachse von 2 bis 8 enthalten ist.

Unter den erfindungsgemäß eingesetzten Langglasfasern werden Glasfasern mit flacher Gestalt und einer nicht-kreisförmigen Querschnittsfläche verstanden, wobei diese bevorzugt in Form von endlosen Strängen (Rowings) eingesetzt werden. Das Abmessungsverhältnis der Hauptquerschnittsachse zur Nebenquerschnittsachse beträgt dabei bevorzugt zwischen 3,5 und 6,0 besonders bevorzugt zwischen 3,5 und 5,0. Dabei ist die Querschnittsfläche bevorzugt länglich oval, elliptisch oder nahezu rechteckig. Die Langglasfaser selbst kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind. Die Glasfasern für sich gesehen können auch mit einer A-mino- oder Epoxysilanbeschichtung versehen sein.

Ein weiteres kennzeichnendes Merkmal der eingesetzten Langglasfasern besteht darin, dass die Länge der Hauptquerschnittsachse bevorzugt im Bereich von 6 bis 40 µm, insbesondere von 17 bis 30 µm und die Länge der Nebenquerschnittsachse im Bereich von 3 bis 20 µm, insbesondere von 4 bis 10 µm liegt.

Die erfindungsgemäßen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermässiger Faserbruch und die damit einhergehende starke Reduktion der Faserlänge weitgehend vermieden wird. Beim Spritzguss bedeutet dies, dass Schnecken mit grossem Durchmesser verwendet werden sollten.

Aus stofflicher Sicht betreffend die Zusammensetzung der die Polyamidmatrix bildenden Polymermischung (A) umfasst die Erfindung grundsätzlich alle Kombinationen der unter den Merkmalen (A1) genannten aliphatischen Polyamide mit dem Polyamid (A2). Die aliphatischen Polyamide (A1) besitzen dabei bevorzugt eine Lösungsviskosität ηᵣₑₗ, gemessen in m-Kresol (0,5 Gew.-%, 20 °C) im Bereich von 1,3 bis 2,3, bevorzugt im Bereich von 1,35 bis 1,9, insbesondere im Bereich von 1,40 bis 1,85. Die Herstellung dieser aliphatischen Polyamide erfolgt, wie aus dem Stand der Technik bekannt, durch Polymersiation bzw. Polykondensation der entsprechenden Lactame und/oder Aminocarbonsäuren und/oder Diamine und Disäuren.

Bei den Polyamiden (A2) sind die Copolyamide 6I/6T sowie MXD6/MXDI bevorzugt. Hinsichtlich der Copolyamide 6I/6T sind zwei verschiedene Zusammensetzungsbereiche besonders bevorzugt. Zum einen sind dies die amorphen Copolyamide mit einem Anteil von weniger als 50 Mol-% 6T-Einheiten, wobei ein Zusammensetzungsbereich 6T:6I von 20:80 bis 45:55 bevorzugt wird, und zum anderen sind dies die hochschmelzenden Copolymamide mit einem 6T-Anteil von grösser als 50 mol-%, wobei ein Zusammensetzungsbereich 6T:6I von 55:45 bis 80:20, insbesondere von 70:30 bevorzugt wird. Im Hinblick auf die Copolyamide MXD6/MXDI werden MXD6 reiche Zusammensetzungen bevorzugt, insbesondere mit einem MXD6-Gehalt von grösser als 80 mol-%.

Bezüglich der Polymermischung (A) werden folgende Zusammensetzungen bevorzugt:
- (A1):: PA 66
- (A2):: PA 6I/6T, wobei das Mol-Verhältnis im Bereich von 65:35 bis 75:25 liegt oder insbesondere 67:33 beträgt.
- (A1):: PA 610 und/oder PA1010, wobei im Falle einer Mischung die Komponenten im Verhältnis von 1:1 bis 4:1 eingesetzt werden.
- (A2):: PA 6I/6T, wobei das Mol-Verhältnis im Bereich von 65:35 bis 75:25 liegt oder insbesondere 67:33 beträgt.
- (A1):: Mischung aus PA 6 und PA66, im Verhältnis von 1:2 bis 1:4, insbesondere von 1:4
- (A2):: PA 6I/6T, wobei das Mol-Verhältnis im Bereich von 65:35 bis 75:25 liegt oder insbesondere 67:33 beträgt.
- (A1):: PA 66
- (A2):: PA 6I/6T, wobei das Mol-Verhältnis im Bereich von 40:60 bis 25:75 liegt oder insbesondere 30:70 beträgt.
- (A1):: PA 66
- (A2):: PA 6T/66, wobei das Mol-Verhältnis im Bereich von 50:50 bis 70:30 liegt oder insbesondere 55:45 beträgt.
- (A1):: PA 66
- (A2):: PA MXD6/MXDI, wobei das Mol-Verhältnis im Bereich von 70:30 bis 90:10 liegt oder insbesondere 88:12 beträgt.
- (A1):: PA 12
- (A2):: PA MACM12.
- (A1):: PA 12
- (A2):: PA MACMI/12, wobei der Gehalt an Laurinlactam im Bereich von 15 bis 45 mol-%, bevorzugt kleiner als 40 mol-%, insbesondere kleiner 35 mol-% ist.

Wobei die Komponente (A1) jeweils bevorzugt im Bereich von 60 bis 80 Gew.-%, insbesondere von 65 bis 75 Gew.-% und Komponente (A2) bevorzugt im Bereich von 20 bis 40 Gew.-%, insbesondere im Bereich von 25 bis 35 Gew.-% eingesetzt wird.

In einer besonderen Ausführungsform werden folgende Zusammensetzungen für die Polymermischung (Polyamidmatrix) bevorzugt:
- (A1) :: 70-100 Gew.-% PA 1010 oder PA 1012 oder PA 11 oder PA 12
- (A2):: 0-30 Gew.-% PA MACM12 oder PA MACMI/12 oder PA PACM12/MACM12,
wobei insbesondere bevorzugt wird, wenn die Polymermatrix ausschliesslich durch Komponente (A1) gebildet wird.

In einer weiteren bevorzugten Ausführungsform hat die Komponente (A2) einen höheren Schmelzpunkt als Komponente (A1), wobei der Schmelzpunkt von (A2) grösser als 270°C, insbesondere grösser als 290°C ist.

In einer weiteren Ausführungsform ist die Komponente amorph und weist eine Glasübergangstemperatur von grösser 90°C, bevorzugt grösser 110°C und besonders bevorzugt grösser 140°C auf.

Die Polyamide (A2) besitzen dabei bevorzugt eine Lösungsviskosität ηᵣₑₗ, gemessen in m-Kresol (0,5 Gew.-%, 20 °C) im Bereich von 1,3 bis 2,0, bevorzugt im Bereich von 1,35 bis 1,9, insbesondere im Bereich von 1,40 bis 1,8.

Die Herstellung der Polyamide (A2) erfolgt, wie ebenfalls aus dem Stand der Technik bekannt, durch Umsetzung von im Wesentlichen molaren Mengen der entsprechenden Diamine und Dicarbonsäuren und gegebenenfalls Lactamen und/oder Aminocarbonsäuren.

Die die Polyamidmatrix bildende Polymermischung kann weiterhin noch wie aus dem Stand der Technik schon bekannt, teilchen- und/oder schichtförmige Füllstoffe enthalten. Diese teilchen- und/oder schichtförmigen Füllstoffe (C) können mit einem Anteil bis zu 30 Gewichtsprozent in der Polymermischung vorhanden sein. Eine bevorzugte Menge der Füllstoffe beträgt 0,1 bis 20 Gew.-%.

Als Beispiele für derartige Füllstoffe, die in Teilchen- und/oder Schichtform vorliegen können, seien Whiskers, Talkum, Glimmer, Silicate, Quarz, Titandioxid, Wollastonit, Kaolin, Kieselsäuren, Magnesiumkarbonat, Magnesiumhydroxid, Kreide gemahlen oder gefälltes Kalziumkarbonat, Kalk, Feldspat, Bariumsulfat, permanentmagnetische oder magnetisierbare Metalle oder Legierungen, Glaskugeln, Hohlglaskugeln, hohlkuglige Silikatfüllstoffe, natürliche Schichtsilikate, synthetische Schichtsilikate und Mischung hiervon genannt.

Als bevorzugte weitere Verstärkungsstoffe seien beispielhaft Kohlenstofffasern (Carbonfasern, Graphitfasern), Borfasern, Aramid- (p- oder m-Aramidfasern (z.B. Kevlar^{®} oder Nomex^{®}, DuPont) oder deren Gemische) und Basaltfasern genannt, wobei die genannten Verstärkungsfasern als Langfasern, auch in Form einer Mischung von verschiedenen Fasern eingesetzt werden können. In einer weiteren alternativen erfindungsgemäßen Ausführungsform können die erfindungsgemäß eingesetzten Glasfasern im Gemisch mit Kohlenstofffasern (Carbonfasern, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen.

Bevorzugtermassen enthalten die erfindungsgemäßen Formmassen im Wesentlichen nur die Komponente (B) als Verstärkungsfaser, insbesondere ausschließlich die Komponente (B) als Verstärkungsfaser. Die Komponente (B) macht gemäss einer weiteren bevorzugten Ausführungsform im Bereich von 30-60 Gewichtsprozent, insbesondere 35-55 Gewichtsprozent, bevorzugt von wenigstens 40 Gewichtsprozent der Polyamidformmasse aus, wobei dieser Anteil bevorzugtermaßen zur Hauptsache oder sogar ausschließlich durch Langglasfasern mit nicht-kreisförmigem Querschnitt gebildet wird.

In der Polymermischung, die die Polyamidmatrix bildet, können weiterhin noch Additive in einer Menge bis zu 5 Gew.-%, bevorzugt in einer Menge von 0,1 bis 5 Gew.-% enthalten sein. Übliche Additive sind beispielsweise Wärmeschutzmittel, Antioxidanzien, Lichtschutzmittel, Gleitmittel, Entformungsmittel, Nukleierungsmittel, Pigmente, Farbstoffe und Antidrippingmittel sowie Mischungen hiervon.

Es hat sich in Versuchen gezeigt, dass insbesondere eine Polyamidformmasse, die die folgenden Komponenten enthält, überlegene Eigenschaften aufweist:
A: 30 - 80 Gew.-% der Polyamidmatrix,
B: 20 - 70 Gew.-% Langglasfasern,
C: 0,1 - 20 Gew.-% Füllstoff, und
D: 0,1 - 5 Gew.-% Additive,
wobei die Summe dieser Komponenten 100 Gew.-% beträgt.

Überraschenderweise wurde gefunden, dass, wenn die gefüllten Polyamidformmassen nach der Erfindung zu Formkörpern verarbeitet werden, Formkörper erhalten werden, die überdurchschnittliche Eigenschaften, insbesondere in Bezug auf die Kerbschlagzähigkeit, die Festigkeit und Steifigkeit sowie der Wärmeformbeständigkeit aufweisen. Offensichtlich bilden die erfindungsgemäß eingesetzten Langglasfasern durch Verwollung der bei der Herstellung der Formmassen und der Formkörper gebildeten Faserbruchstücke ein Gespinst (Faseragglomerat) im Formkörper, das die Rissfortpflanzung wirksam unterbindet und zur Formhaltigkeit bei höheren Temperaturen beiträgt und so die ausgezeichneten Eigenschaften ermöglicht. Die ausgeprägte Verwollung der flachen Langglasfasern im Formkörper wird noch dadurch verstärkt, dass die flachen Langglasfasern bei Compoundierung und Spritzguss weniger stark geschädigt werden als die üblichen Langglasfasern mit kreisrundem Querschnitt. Hierzu trägt auch ganz entscheidend die tiefviskose Polyamid-Matrix bei, die auch unter ungünstigen Umständen, wie z.B. hohe Scherung beim Spritzgießen der Fertigung, dafür sorgt, dass die Faserbruchstücke im Formkörper eine ausreichende mittlere Länge und Längenverteilung aufweisen, die zu einer ausgeprägten dreidimensionalen Faseragglomeration und damit zu hervorragenden Eigenschaften führen.

Besonders hervorzuheben bei der erfindungsgemäßen Formmasse und den daraus hergestellten Formkörpern ist, dass die Kerbschlagzähigkeit bei 23°C um mindestens 15% höher ist als die der vergleichbaren Polyamidformmasse mit Langglasfasern mit kreisförmigem Querschnitt als Verstärkung. Es hat sich sogar gezeigt, dass die Kerbschlagzähigkeit bei den vergleichbaren Polyamidformmassen um 20 - 50% höher ist.

Des Weiteren ist hervorzuheben, dass die erfindungsgemäßen Formmassen und die daraus hergestellten Formkörper eine Wärmeformbeständigkeit unter Last nach ASTM D 648 (HDT-C) aufweisen, die um mindestens 5° größer ist als die der vergleichbaren Polyamidformmassen mit Langglasfaser mit rundem Querschnitt als Verstärkung. Es hat sich sogar gezeigt, dass der HDT C bei den vergleichbaren Polyamidformmassen um bis zu 10°C größer ist.

Überraschenderweise konnte bei den erfindungsgemäßen Formmassen und den daraus hergestellten Formkörpern festgestellt werden, dass die Quersteifigkeit und Querfestigkeit gegenüber vergleichbaren Polyamidformmassen mit Langglasfasern mit kreisförmigem Querschnitt deutlich verbessert werden konnten. Bei den erfindungsgemäßen Formmassen und den daraus hergestellten Formkörpern beträgt die Quersteifigkeit (gemessen quer zur Spritzrichtung) mindestens 55%, bevorzugt mindestens 58% der gemessenen Längssteifigkeit. Bei vergleichbaren Polyamidformmassen mit Langglasfasern mit kreisförmigem Querschnitt beträgt die Quersteifigkeit bestenfalls 50% in Bezug zur Längssteifigkeit.

Darüber hinaus zeichnen sich die erfindungsgemäßen Formmassen durch eine sehr gute Verarbeitbarkeit und Fliessfähigkeit aus. Hierzu tragen zum einen die geeignet ausgewählten Matrixkomponenten (A1) und (A2) sowie die spezielle Geometrie der langen Flachglasfasern gleichermaßen bei.

Die Erfindung wird nachfolgend anhand der folgenden Beispiele näher erläutert.

In den Beispielen und Vergleichsbeispielen wurden nachfolgend genannte Materialien verwendet:
- PA Typ A:: Polyamid-66 mit ηᵣₑₗ = 1,82, RADICI, Italien
- PA Typ B:: Polyamid 6I/6T (67:33) mit ηᵣₑₗ = 1,57, EMS-CHEMIE AG, Schweiz
- PA Typ C:: Polyamid 6I/6T (30:70) mit ηᵣₑₗ = 1,52, EMS-CHEMIE AG, Schweiz
- PA Typ D:: Polyamid MXD6/MXDI (88:12) mit ηᵣₑₗ = 1,62, EMS-CHEMIE AG, Schweiz
- PA Typ E:: Polyamid 12 mit ηᵣₑₗ = 1,65, EMS-CHEMIE AG, Schweiz
- PA Typ F:: Polyamid 12 mit ηᵣₑₗ = 1,86, EMS-CHEMIE AG, Schweiz
- PA Typ G: Polyamid MACM12 mit ηᵣₑₗ = 1,74, EMS-CHEMIE AG, Schweiz
- PA Typ H:: Polyamid MACMI/12 mit ηᵣₑₗ = 1,70, EMS-CHEMIE AG, Schweiz
- Glasfasern Typ A:: Flache Glasfaserrovings, 27 µm breit, 7 µm dick, Aspektverhältnis der Querschnittsachsen = 3,8, Aminosilanschlichte, (lange flache Glasfasern, erfindungsgemäß)
- Glasfasern Typ B:: NITTOBO CSG3PA-820, 3 mm lang, 28 µm breit, 7 µm dick, Aspektverhältnis der Querschnittsachsen = 4, Aminosilanschlichte, NITTO BO-SEKI, Japan (flache Schnittglasfasern, Stand der Technik)
- Glasfasern Typ C:: Im Querschnitt kreisförmige Glasfaserrovings, OC4531, 17 µm Durchmesser, Owens Corning (Langglasfasern mit kreisförmigem Querschnitt, Stand der Technik)

Die Formmassen der Zusammensetzungen in Tabelle 1 und 2 werden auf einen Zweiwellenextruder der Fa. Werner u. Pfleiderer Typ ZSK 30 hergestellt. Die Granulate der Komponenten (A1) und (A2) sowie die Zusatzstoffe werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 290°C eingestellt. Bei 150 bis 200 upm wurden 10 kg Durchsatz erreicht. Die Granulierung erfolgte mittels einer Unterwassergranulierung bzw. Heißabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 110°C für 24h wurden die Granulateigenschaften gemessen und die Prüfkörper hergestellt.

Die Prüfkörper wurden auf einer Arburg Spritzgießanlage hergestellt, wobei die Zylindertemperaturen von 260°C bis 300°C und eine Scheckenumfangsgeschwindigkeit von 15 m/min eingestellt wurden. Die Formtemperatur wurde mit 100 - 140°C gewählt.

Die Messungen wurden nach folgenden Normen und an folgenden Prüfkörpern durchgeführt.

Zug-E-Modul:
ISO 527 mit einer Zuggeschwindigkeit von 1 mm/min ISO-Zugstab, Norm: ISO/CD 3167, Typ A1, 170 x 20/10 x 4 mm, Temperatur 23 °C
Die Quersteifigkeit wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

Reißfestigkeit und Reißdehnung:
ISO 527 mit einer Zuggeschwindigkeit von 5 mm/min ISO-Zugstab, Norm: ISO/CD 3167, Typ A1, 170 x 20/10 x 4 mm, Temperatur 23 °C
Die Querfestigkeit wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

Schlagzähigkeit nach Charpy:
ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Glasumwandlungstemperatur (Tg), Schmelzenthalpie (ΔH) ISO-Norm 11357-1/-2 Granulat

Die Differential Scanning Calorimetry (DSC) wurde mit Aufheizrate von 20 °C/min durchgeführt.

Relative Viskosität:
DIN EN ISO 307, in 0,5 Gew.-%-iger m-Kresollösung,
Temperatur 20 °C

MVR: (Melt volume rate)
nach ISO 1133 bei 330 bzw. 340°C und einer Belastung von 21,6 kg

Fließlänge:
Die Fließlängen wurden mittels einer Arburg-Spritzgussmaschine (Typ: ARBURG - ALLROUNDER 320-210-750) bestimmt. Es wurden Fließspiralen der Dimension 1,5mm x 10 mm bei einer Massetemperatur von 290°C und einer Formtemperatur von 100°C angefertigt.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

**Tabelle 1: Zusammensetzung und Eigenschaften der Bespiele 1 - 3 und der Vergleichsbeispiele VB1 und VB2**

| Beispiel | Einheit | 1 | 2 | 3 | VB1 | VB2 |
|---|---|---|---|---|---|---|
| Zusammensetzung | | | | | | |
| PA Typ A | Gew.-% | 37.5 | 37.5 | 37.5 | 37.5 | 37.5 |
| PA Typ B | Gew.-% | 12.5 | | | 12.5 | 12.5 |
| PA Typ C | Gew.-% | | 12.5 | | | |
| PA Typ D | Gew.-% | | | 12.5 | | |
| Glasfasern Typ A | Gew.-% | 50.0 | 50.0 | 50.0 | | |
| Glasfasern Typ B | Gew.-% | | | | 50.0 | |
| Glasfasern Typ C | Gew.-% | | | 0 | | 50.0 |

| **Eigenschaften** | | | | | | |
|---|---|---|---|---|---|---|
| HDT A | °C | 256 | 257 | 255 | 245 | 255 |
| HDT C | °C | 230 | 232 | 230 | 175 | 220 |
| Zug-E-Modul längs | MPa | 16000 | 16100 | 16050 | 15870 | 15900 |
| Zug-E-Modul quer | MPa | 9600 | 9650 | 9600 | 7900 | 7950 |
| Reissfestigkeit längs | MPa | 220 | 222 | 212 | 204 | 210 |
| Reissfestigkeit quer | MPa | 148 | 151 | 147 | 134 | 133 |
| Schlagzähigkeit Charpy, 23°C | kJ/m² | 90 | 90 | 85 | 75 | 80 |
| Kerbschlagzähigkeit Charpy, 23°C | kJ/m² | 45 | 42 | 41 | 25 | 31 |
| Fliesslänge (290°C/100°C) | mm | 300 | 280 | 320 | 250 | 230 |

Die Formmassen gemäss den Beispielen 1 - 3 zeigen hinsichtlich der Wärmeformbeständigkeit HDT-C, der Kerbschlagzähigkeit, der Steifigkeit und Festigkeit, insbesondere quer zur Spritzrichtung Vorteile gegenüber den Vergleichsbeispielen VB1 und 2 auf. Gleichzeitig besitzen die erfindungsgemässen Formmassen gute Fliesseigenschaften, so dass selbst dünnwandige Formkörper problemlos gefertigt werden können. Die Verarbeitung von Formmassen nach dem Stand der Technik ist häufig als kritisch anzusehen, so dass trotz schonender Verarbeitung oder spezieller Werkzeuggeometrie eine grössere Faserschädigung im Vergleich zu den erfindungsgemässen Polyamid-Formmassen in Kauf genommen werden muss.Tabelle 2:Zusammensetzung und Eigenschaften der Bespiele 4 - 7 und der Vergleichsbeispiele VB3

| Beispiel | Einheit | 4 | 5 | 6 | 7 | VB3 |
|---|---|---|---|---|---|---|
| **Zusammensetzung** | | | | | | |
| PA Typ E | Gew.-% | 50.0 | | 40.0 | 40.0 | 50.0 |
| PA Typ F | Gew.-% | | 50.0 | | | |
| PA Typ G | Gew.-% | | | 10.0 | | |
| PA Typ H | Gew.-% | | | | 10.0 | |
| Glasfasern Typ A | Gew.-% | 50.0 | 50.0 | 50.0 | 50.0 | |
| Glasfasern Typ C | Gew.-% | | | | | 50.0 |

| Eigenschaften | | | | | | |
|---|---|---|---|---|---|---|
| HDT A | °C | 176 | 177 | 176 | 176 | 1766 |
| HDT C | °C | 160 | 163 | 160 | 159 | 154 |
| Zug-E-Modul längs | MPa | 14300 | 14340 | 14360 | 14350 | 14060 |
| Zug-E-Modul quer | MPa | 8250 | 8200 | 8470 | 8320 | 6850 |
| Reissfestigkeit längs | MPa | 195 | 198 | 196 | 196 | 190 |
| Reissfestigkeit quer | MPa | 101 | 103 | 105 | 102 | 94 |
| Schlagzähigkeit Charpy, 23°C | kJ/m² | 98 | 100 | 100 | 95 | 90 |
| Kerbschlagzähigkeit Charpy, 23°C | kJ/m² | 52 | 55 | 53 | 52 | 41 |
| Fliesslänge (280°C/80°C) | mm | 245 | 210 | 230 | 240 | 170 |

Ein Vergleich der Beispiele 4 - 7 mit dem Vergleichsbeispiel VB3 zeigt, dass die erfindungsgemässen Formmassen hinsichtlich HDT-C, der Steifigkeit und Festigkeit, insbesondere quer zur Spritzrichtung, sowie der Kerbschlagzähigkeit den Materialien des Standes der Technik überlegen sind. Darüber hinaus lassen sich die erfindungsgemässen Formmassen deutlich besser verarbeiten und weisen ein besseres Fliessverhalten auf.

## Patentansprüche

1. Gefüllte Polyamid (PA)-Formmassen aus
A) 40 - 80 Gew.-% einer eine Polyamidmatrix bildenden Polymermischung enthaltend
A1) 55 bis 85 Gew.-% mindestens eines aliphatischen Polyamids ausgewählt aus der Gruppe PA6, PA46, PA66, PA610, PA612, PA6/12, PA1010, PA11, PA12, PA1012, PA1212 und/oder Mischungen und/oder Copolyamide hiervon,
und
A2) 15 bis 45 Gew.-% mindestens eines Polyamids ausgewählt aus MACM10-18, PACM10-18, MACMI, MACMT, MXDI, MXD6, 6I, 6T, 6I/6T und/oder Mischungen und/oder Copolyamiden hiervon und den Copolyamiden mit PA 66, PA 610, PA 6 und PA 12,
B) 20 bis 60 Gew.-% einer Langglasfaser in Form von endlosen Strängen (Rovings) mit nicht-kreisförmiger Querschnittsfläche und einem Abmessungsverhältnis von der Hauptquerschnittsachse zur Nebenquerschnittsachse von 2 bis 8,
C) bis zu 30 Gew.-% Teilchen und/oder schichtförmige Füllstoffe, sowie
D) bis zu 5 Gew.-% Additive.

2. Gefüllte Polyamid (PA)-Formmassen aus
A) 30 - 80 Gew.-% einer eine Polyamidmatrix bildenden Polymermischung enthaltend
A1) 55 bis 100 Gew.-% mindestens eines aliphatischen Polyamids ausgewählt aus der Gruppe PA1010, PA1012, PA1212 und/oder Mischungen und/oder Copolyamide hiervon,
und
A2) 0 bis 45 Gew.-% eines Polyamids ausgewählt aus MACM10-18, PACM10-18, MACMI, MACMT, MXDI, MXD6, 6I, 6T und/oder Mischungen und/oder Copolyamiden hiervon,
B) 20 bis 70 Gew.-% einer Langglasfaser in Form von endlosen Strängen (Rovings) mit nicht-kreisförmiger Querschnittsfläche und einem Abmessungsverhältnis von der Hauptquerschnittsachse zur Nebenquerschnittsachse von 2 bis 8,
C) bis zu 30 Gew.-% Teilchen und/oder schichtförmige Füllstoffe, sowie
D) bis zu 5 Gew.-% Additive.

3. PA-Formmasse nach Anspruch 1 oder 2, **dadurch gekennzeichnet, dass** das Abmessungsverhältnis der Hauptquerschnittsachse zur Nebenquerschnittsachse zwischen 3,5 und 6,0 liegt.

4. PA-Formmasse nach einem der Ansprüche 1 bis 3, **dadurch gekennzeichnet, dass** die Langglasfaser ausgewählt ist aus der Gruppe aus E-Glasfasern, A-Glasfasern, C-Glasfasern, D-Glasfasern, M-Glasfasern, S-Glasfasern und/oder R-Glasfasern.

5. PA-Formmasse nach einem der Ansprüche 1 bis 4, **dadurch gekennzeichnet, dass** bei den Langglasfasern der Durchmesser der Hauptquerschnittsachse 6 bis 40 µm und der Durchmesser der Nebenquerschnittsachse 3 bis 20 µm beträgt.

6. PA-Formmasse nach Anspruch 1 sowie nach den Ansprüchen 3 bis 5, sofern sich diese auf Anspruch 1 beziehen, **dadurch gekennzeichnet, dass** die Polyamide A2 ausgewählt sind aus 6T/6I, MXD6/MXDI, MACM12, PACM12/MACM12, 6I, 6T/66, 6I/6T.

7. PA-Formmasse nach mindestens einem der Ansprüche 2 bis 5, **dadurch gekennzeichnet, dass** die Polyamide A2 ausgewählt sind aus 6T/6I, MXD6/MXDI, MACM12, PACM12/MACM12, 6I, 6I/6T.

8. PA-Formmasse nach mindestens einem der Ansprüche 1 bis 7, **dadurch gekennzeichnet, dass** 0,1 bis 30 Gew.-% Teilchen und/oder schichtförmige Füllstoffe C enthalten sind.

9. PA-Formmasse nach mindestens einem der Ansprüche 1 bis 8, **dadurch gekennzeichnet, dass** 0,1 bis 5 Gew.-% Additive D enthalten sind.

10. Verwendung der Formmasse nach mindestens einem der Ansprüche 1 bis 9 zur Herstellung von Formkörpern.

11. Formkörper erhältlich aus einer Polyamidformmasse nach mindestens einem der Ansprüche 1 bis 9.

12. Formkörper nach Anspruch 11, **dadurch gekennzeichnet, dass** er mittels Spritzguss, Extrusion, Pultrusion, Spritzblasen oder anderen Verformungstechniken hergestellt worden ist.

## Claims

1. Filled polyamide (PA) moulding compounds made of
A) 40 - 80% by weight of a polymer mixture forming a polyamide matrix containing
A1) 55 to 85% by weight of at least one aliphatic polyamide selected from the group PA6, PA46, PA66, PA610, PA612, PA6/12, PA1010, PA11, PA12, PA1012, PA1212 and/or mixtures and/or copolyamides hereof,
and
A2) 15 to 45% by weight of at least one polyamide selected from MACM10-18, PACM10-18, MACMI, MACMT, MXDI, MXD6, 6I, 6T, 6I/6T and/or mixtures and/or copolyamides hereof,
B) 20 to 65% by weight of a long glass fibre in the form of endless strands (rovings) with non-circular cross-sectional area and a dimensional ratio of the main cross-sectional axis to the subsidiary cross-sectional axis of 2 to 8.
C) up to 30% by weight of particle and/or layer-shaped fillers, and
D) up to 5% by weight additives.

2. Filled polyamide (PA) moulding compounds made of
A) 30 - 80% by weight of a polymer mixture forming a polyamide matrix containing
A1) 55 to 100% by weight of at least one aliphatic polyamide selected from the group PA1010, PA1012, PA1212 and/or mixtures and/or copolyamides hereof,
and
A2) 0 to 45% by weight of a polyamide selected from MACM10-18, PACM10-18, MACMI, MACMT, MXDI, MXD6, 6I, 6T and/or mixtures and/or copolyamides hereof,
and also
B) 20 to 70% by weight of a long glass fibre in the form of endless strands (rovings) with a non-circular cross-sectional area and a dimensional ratio of the main cross-sectional axis to the subsidiary cross-sectional axis of 2 to 8.
C) up to 30% by weight of particle and/or layer-shaped fillers, and
D) up to 5% by weight additives.

3. PA moulding compound according to claim 1 or 2, **characterised in that** the dimensional ratio of the main cross-sectional axis to the subsidiary cross-sectional axis is between 3.5 and 6.0.

4. PA moulding compound according to claims 1 to 3, **characterised in that** the long glass fibre is selected from the group comprising E-glass fibres, A-glass fibres, C-glass fibres, D-glass fibres, M-glass fibres, S-glass fibres and/or R-glass fibres.

5. PA moulding compound according to claims 1 to 4, **characterised in that**, in the case of the long glass fibres, the length of the main cross-sectional axis is 6 to 40 µm and the length of the subsidiary cross-sectional axis is 3 to 20 µm.

6. PA moulding compound according to claim 1 and claims 3 to 5, **characterised in that** the polyamides A2 are selected from 6T/6I, MXD6/MXDI, MACM12, PACM12/MACM12, 61, 6T/66, 6I/6T.

7. PA moulding compound according to at least one of the claims 2 to 5, c.i.t. the polyamides A2 are selected from 6T/6I, MXD6/MXDI, MACM12, PACM12/MACM12, 6I/6T.

8. PA moulding compound according to at least one of the claims 1 to 7, **characterised in that** 0.1 to 30% by weight of particle- and/or layer-shaped fillers C are contained.

9. PA moulding compound according to claims 1 to 8, **characterised in that** 0.1 to 5% by weight of additives D are contained.

10. Use of the moulding compound according to at least one of the claims 1 to 9 for the production of moulded articles.

11. Moulded article obtainable from a polyamide moulding compound according to one of the claims 1 to 9.

12. Moulded article according to claim 11, **characterised in that** it has been produced by means of injection moulding, extrusion, pultrusion, blow moulding or other moulding techniques.

## Revendications

1. Mélanges à mouler de polyamides (PA) chargés, constitués de
A) 40 à 80 % en poids d'un mélange de polymères formant une matrice de polyamide, contenant
A1) 55 à 85 % en poids d'au moins un polyamide aliphatique choisi dans le groupe consistant en PA6, PA46, PA66, PA610, PA612, PA6/12, PA1010, PA11, PA12, PA1012, PA1212, et/ou les mélanges et/ou copolyamides de ceux-ci,
et
A2) 15 à 45 % en poids d'au moins un polyamide choisi parmi MACM10-18, PACM10-18, MACMI, MACMT, MXDI, MXD6, 6I, 6T, 6I/6T et/ou les mélanges et/ou copolyamides de ceux-ci, et les copolyamides avec PA 66, PA 610, PA 6 et PA 12,
B) 20 à 60 % en poids d'une fibre de verre longue sous forme de stratifils continus (rovings), ayant une surface en section transversale non circulaire et un rapport dimensionnel entre l'axe de la section transversale principale et l'axe de la section transversale secondaire de 2 à 8,
C) jusqu'à 30 % en poids de particules et/ou de matières de charge stratifiées,
ainsi que
D) jusqu'à 5 % en poids d'additifs.

2. Mélanges à mouler de polyamides (PA) chargés, constitués de
A) 30 à 80 % en poids d'un mélange de polymères formant une matrice de polyamide, contenant
A1) 55 à 100 % en poids d'au moins un polyamide aliphatique choisi dans le groupe PA1010, PA1012, PA1212 et/ou les mélanges et/ou copolyamides de ceux-ci,
et
A2) 0 à 45 % en poids d'un polyamide choisi parmi MACM10-18, PACM10-18, MACMI, MACMT, MXDI, MXD6, 6I, 6T et/ou les mélanges et/ou copolyamides de ceux-ci,
B) 20 à 70 % en poids d'une fibre de verre longue sous forme de stratifils continus (rovings), ayant une surface en section transversale non circulaire et un rapport dimensionnel entre l'axe de la section transversale principale et l'axe de la section transversale secondaire de 2 à 8,
C) jusqu'à 30 % en poids de particules et/ou de matières de charge stratifiées,
ainsi que
D) jusqu'à 5 % en poids d'additifs.

3. Mélange à mouler de PA selon la revendication 1 ou 2, **caractérisé en ce que** le rapport dimensionnel entre l'axe de la section transversale principale et l'axe de la section transversale secondaire est compris entre 3,5 et 6,0.

4. Mélange à mouler de PA selon l'une des revendications 1 à 3, **caractérisé en ce que** la fibre de verre longue est choisie dans le groupe des fibres de verre E, des fibres de verre A, des fibres de verre C, des fibres de verre D, des fibres de verre M, des fibres de verre S et/ou des fibres de verre R.

5. Mélange à mouler de PA selon l'une des revendications 1 à 4, **caractérisé en ce que**, dans les fibres de verre longues, le diamètre de l'axe de la section transversale principale est de 6 à 40 µm, et le diamètre de l'axe de la section transversale secondaire est de 3 à 20 µm.

6. Mélange à mouler de PA selon la revendication 1, ainsi que selon les revendications 3 à 5, dans la mesure où ces dernières se rapportent à la revendication 1, **caractérisé en ce que** les polyamides A2 sont choisis parmi 6T/6I, MXD6/MXDI, MACM12, PACM12/MACM12, 6I, 6T/66, 6I/6T.

7. Mélange à mouler de PA selon au moins l'une des revendications 2 à 5, **caractérisé en ce que** les polyamides A2 sont choisis parmi 6T/6I, MXD6/MXDI, MACM12, PACM12/MACM12, 6I, 6I/6T.

8. Mélange à mouler de PA selon au moins l'une des revendications 1 à 7, **caractérisé en ce qu'**il contient 0,1 à 30 % en poids de particules et/ou de matières de charge stratifiées C.

9. Mélange à mouler de PA selon au moins l'une des revendications 1 à 8, **caractérisé en ce qu'**il contient 0,1 à 5 % en poids des additifs D.

10. Utilisation du mélange à mouler selon au moins l'une des revendications 1 à 9 pour fabriquer des objets moulés.

11. Objet moulé, pouvant être obtenu à partir d'un mélange à mouler de polyamides selon au moins l'une des revendications 1 à 9.

12. Objet moulé selon la revendication 11, **caractérisé en ce qu'**il a été fabriqué par moulage par injection, extrusion, pultrusion, injection soufflage, ou d'autres techniques de déformation.
